Europäisches Patentamt

European Patent Office

Office européen des brevets

(19)

(11) Numéro de publication: **0 035 457**
**A1**

(12) ## DEMANDE DE BREVET EUROPEEN

(21) Numéro de dépôt: 81420017.6

(22) Date de dépôt: 13.02.81

(51) Int. Cl.³: **B 60 B 21/06**, B 60 B 1/14

(30) Priorité: **05.03.80 FR 8005268**

(43) Date de publication de la demande: **09.09.81**
**Bulletin 81/36**

(84) Etats contractants désignés: **AT DE GB IT**

(71) Demandeur: **Leleu, André, 8, Grande Rue de la Flaconnière, F-69340 Francheville (FR)**

(72) Inventeur: **Leleu, André, 8, Grande Rue de la Flaconnière, F-69340 Francheville (FR)**

(74) Mandataire: **Karmin, Roger et al, Cabinet MONNIER 150, cours Lafayette, F-69003 Lyon (FR)**

(54) **Perfectionnements aux jantes pour roues à bras rigides.**

(57) La jante roulée (3) d'une roue à bras rigides (2) comporte des taquets (6) rivés à la partie transversale de cette jante et sont percés de trous (6c, 6d). Ceux-ci se trouvent à la même distance (d) du centre (C) quel que soit le diamètre de ladite jante. Ainsi même avec des jantes à diamètres différents les trous (6c, 6d) viennent toujours en face de ceux (9, 10, 11) des bras (2).

Engin à deux roues.

## Perfectionnements aux jantes pour roues à bras rigides

La présente invention est relative à des perfectionnements apportés aux jantes destinées à être montées sur des roues à bras rigides coulés ou pliés.

A l'heure actuelle il existe une tendance à réaliser les roues de cyclomoteurs ou de motocyclettes de manière que les rayons usuels soient remplacés par des bras rigides. C'est ainsi qu'on trouve sur le marché des roues dont les jantes, les bras et les moyeux sont fabriqués en une seule pièce ; d'autres roues sont réalisées en éléments séparés convenablement assemblés. Dans cette dernière catégorie les jantes sont réalisées soit en métal moulé, soit par roulage d'un profilé. Ces dernières présentent l'avantage de ne pas se briser lors d'un choc mais seulement de se déformer, par contre leur diamètre n'est pas précis. Ainsi lorsqu'on désire remplacer une jante déformée sans changer l'ensemble constitué par le moyeu et les bras ou étoile on a les pires difficultés à trouver une jante propre à s'adapter audit ensemble.

Les perfectionnements qui font l'objet de la présente invention visent à remédier à ces inconvénients et à permettre la réalisation d'une jante roulée qui soit susceptible d'être adaptée sans modification à l'étoile correspondante.

A cet effet la jante comprend une pluralité de taquets faisant saillie vers le centre à partir de sa face intérieure, chacun desdits taquets comprenant des moyens de liaison à l'extrémité correspondante de chaque bras de l'étoile.

Le dessin annexé, donné à titre d'exemple, permettra de mieux comprendre l'invention, les caractéristiques qu'elle présente et les avantages qu'elle est susceptible de procurer :

Fig. 1 est une vue en élévation d'une roue de cyclomoteur ou analogue établie conformément à l'invention.

Fig. 2 est une vue partielle en perspective du profilé utilisé pour réaliser un bras de la roue suivant l'invention.

Fig. 3 en est une coupe partielle à plus grande échelle suivant III-III (fig. 1).

Fig. 4 illustre la manière dont chaque taquet est associé à la jante.

Fig. 5 montre le perçage des taquets pour des jantes de diamètres différents.

Fig. 6 illustre l'ensemble d'une roue suivant l'invention en cours de montage ou de démontage.

Fig. 7 et 8 sont des vues semblables à celle de fig. 2, mais illustrant des variantes.

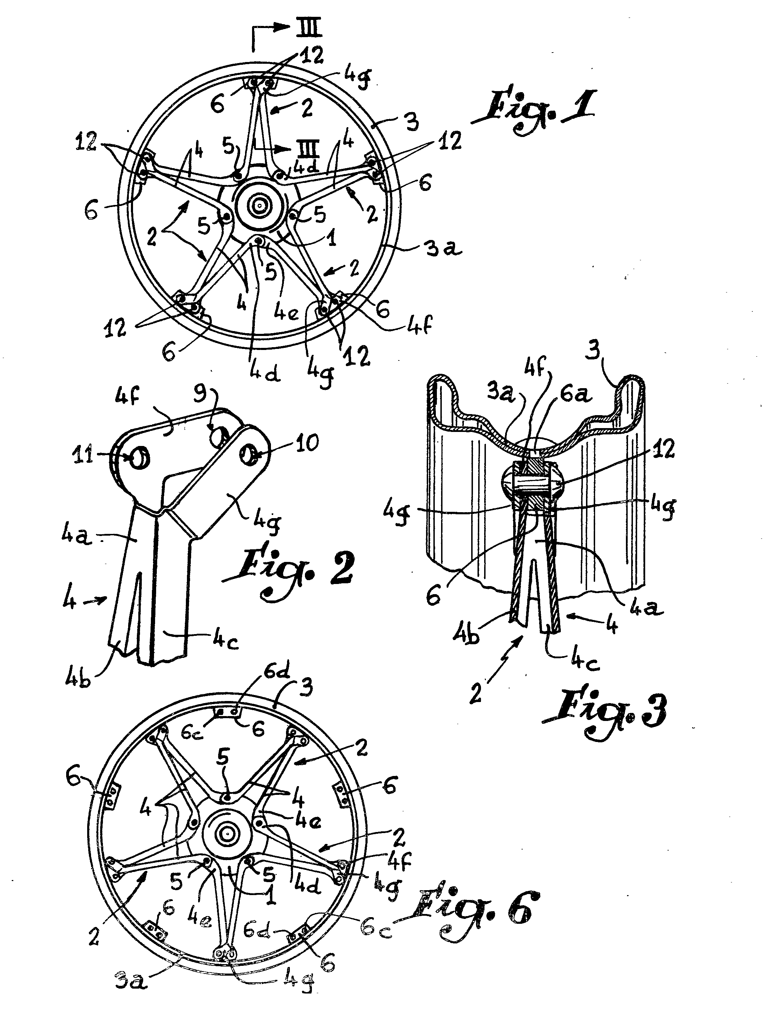

On a représenté en fig. 1 une roue de cyclomoteur ou autre engin comportant essentiellement un moyeu 1 duquel partent des bras radiaux 2 aux extrémités desquels est fixée une jante 3. L'ensemble du moyeu et des bras 2 peut être monobloc ou réalisé par assemblage de l'une des extrémités des bras au moyeu ; cet ensemble est appelé "étoile" dans la suite des présentes.

Dans l'exemple représenté chacun des bras 2 est réalisé au moyen de deux profilés identiques 4 issus du moyeu 1, et qui sont placés face à face, leurs ailes tournées les unes vers les autres. Chacun de ces profilés comprend un voile 4a pratiquement triangulaire disposé axialement par rapport au moyeu 1 et qui comporte deux ailes 4b, 4c (fig. 2). La base de chaque profilé affecte la forme d'une chape dont les jambes 4d, 4e se fixent au moyeu par des rivets 5 ou dispositifs analogues. L'extrémité de chaque profilé opposée à sa chape comporte deux oreilles 4f, 4g dont celle 4g est déportée latéralement vers l'extérieur par rapport à l'aile 4c de laquelle elle est issue, tandis que l'autre oreille 4f qui se trouve dans le plan de l'aile 4b est orientée obliquement.

Ainsi des trous 9, 10 percés aux extrémités de l'oreille 4f, 4g se trouvent-ils en vis-à-vis, tandis qu'un autre trou 11 de l'oreille 4f est dégagé par rapport à l'oreille déportée 4g.

Conformément à l'invention la jante 3 de fig. 4 qui est réalisée par roulage d'un profilé exécuté à partir d'un flan métallique, est associée à des taquets 6 dont le nombre est égal à celui des bras 2. La toile de la jante, c'est-à-dire sa partie transversale 3a, est ainsi pourvue de perforations 7, 8 dans lesquelles s'engagent des tétons 6a, 6b de chaque taquet 6, ces tétons dépassant à l'extérieur de la jante de telle sorte qu'ils peuvent être rivés par rapport à la partie transversale 3a de celle-ci. On est donc en présence d'une jante 3 munie par exemple de six taquets orientés vers le centre et présentant la forme générale d'un trapèze, leur épaisseur étant choisie de manière qu'ils puissent s'engager avec jeu entre les oreilles 4f, 4g des deux profilés 4 de chaque bras 2, les deux trous correspondants 6c, 6d de chaque taquet venant en correspondance avec les trous 9, 10 et celui 11 pour l'assembler à un bras 2 au moyen de rivets 12 (fig. 3) ou autres dispositifs d'assemblage équivalents.

Les trous 6c, 6d sont percés une fois les taquets rivés à la jante à une distance d du centre C de ladite jante rigoureusement égale au rayon sur lequel sont percés les trous 9, 10 et 11 des bras 2.

Lorsqu'on fabrique une jante à partir d'un profilé rectiligne on réalise d'abord le roulage de ce dernier puis la soudure des deux extrémités. On obtient ainsi une jante qui présente généralement une forme ovalisée. Au moyen d'un outillage approprié on ramène la jante à un profil exactement circulaire. Mais le diamètre de la jante finie peut présenter des différences de l'ordre du millimètre. On utilise donc un montage de perçage propre à permettre l'exécution des trous 6c, 6d des taquets 6 sur une même circonférence de rayon d.

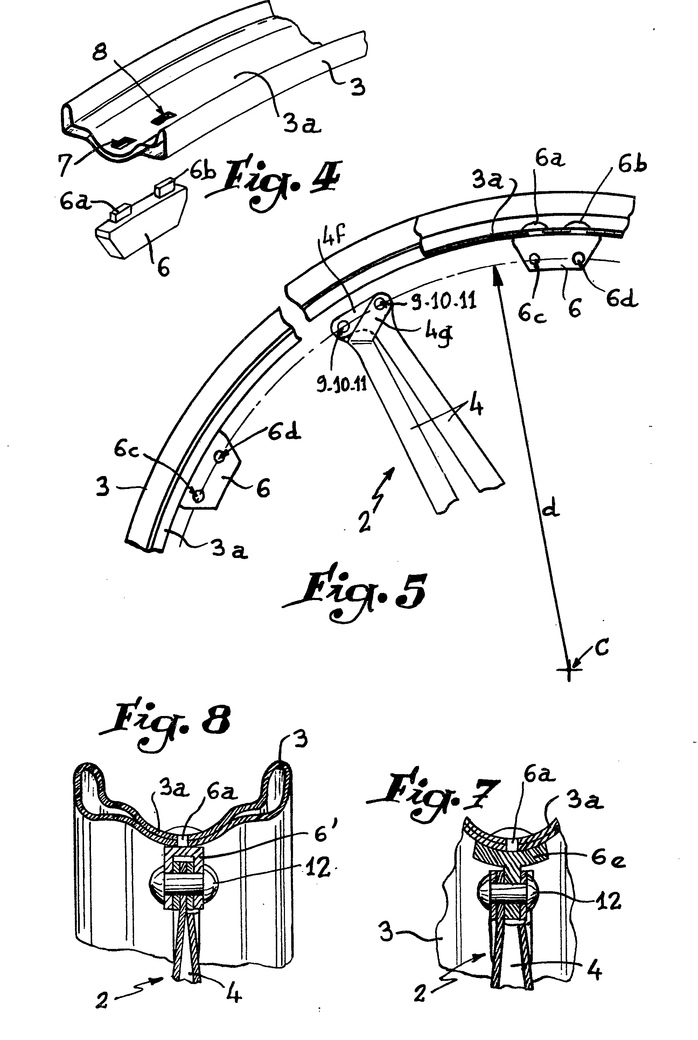

Comme illustré en fig. 5 si le rayon de deux jantes est différent, les trous 6c, 6d de l'une sont plus près de la jante et ceux de l'autre plus éloignés, mais ces trous viendront en correspondance avec ceux 9, 10, 11 des bras 2.

Lorsqu'une jante est endommagée, on élimine les rivets 12, puis l'on fait tourner la jante par rapport à l'étoile constituée par le moyeu 1 et les bras 2 pour dégager les taquets (fig. 6). A cette position on peut séparer aisément l'étoile et la jante endommagée. Celle-ci étant éliminée, on présente une jante neuve dont les taquets sont percés à l'avance comme illustré en fig. 5, et l'on engage les taquets entre les extrémités des bras. Enfin on procède à l'assemblage par rivetage comme indiqué plus haut.

Grâce à la disposition particulière suivant l'invention le montage et le remplacement d'une jante par rapport à l'étoile s'effectuent de manière très simple alors que les jantes usuelles présentent à la place des taquets une nervure continue solidaire de la face intérieure du voile transversal 3a tant et si bien que les bras doivent être assemblés en même temps à la jante et au moyeu. Dans ces conditions le remplacement d'une jante nécessite le démontage des bras de sorte qu'un tel changement ne présente pas un grand intérêt vu le coût de la main d'oeuvre.

Comme montré en fig. 7 chaque taquet pourrait comprendre une embase ou talon 6e destiné à augmenter son assise par rapport au voile transversal 3a de la jante 3.

Suivant une autre variante illustrée en fig. 8 chaque taquet pourrait être réalisé au moyen d'un étrier 6' qui chevaucherait les oreilles 4f, 4g des deux profilés 4 constituant chaque bras 2. Bien entendu dans ce cas les oreilles considérées seraient à l'état libre en appui respectivement les unes contre les autres.

Il doit d'ailleurs être entendu que la description qui précède n'a été donnée qu'à titre d'exemple et qu'elle ne limite nullement 1 domaine de l'invention dont on ne sortirait pas

0035457

en remplaçant les détails d'exécution décrits par tous autres
équivalents.

## Revendications de brevet

1. Jante roulée pour roues à rayons affectant la forme de bras, caractérisée en ce qu'elle comprend des moyens d'être adaptée à l'extrémité des bras (2) de manière indépendante des variations de son diamètre.

2. Jante suivant la revendication 1, caractérisée en ce qu'elle comporte une pluralité de taquets (6) faisant saillie vers le centre à partir de sa face intérieure (3a) et qui comportent chacun des moyens de liaison (6c, 6d, 12) à l'extrémité correspondante d'un bras (2).

3. Jante suivant la revendication 2, caractérisée en ce que les taquets (6) comportent des trous (6c, 6d) destinés à un moyen d'assemblage aux bras (2), la distance (d) de l'axe desdits trous ou centre (C) de la jante correspondant exactement à celle de l'axe des trous (9, 10, 11) ménagés dans les bras (2) au centre du moyeu (1) qui porte ces derniers.

4. Jante suivant l'une quelconque des revendications 1 à 3, caractérisée en ce que les taquets (6) sont rivés par rapport à sa face intérieure et se présentent sous la forme de plaquettes venant s'engager entre les extrémités de chaque bras composé de deux éléments (4, 5) issus du moyeu.

5. Jante suivant l'une quelconque des revendications 1 à 3, caractérisée en ce que les taquets (6) sont rivés par rapport à sa face intérieure et affectent la forme d'un étrier (6') qui chevauche les extrémités des deux éléments (4, 5) constituant chaque bras (2).

6. Jante suivant l'une quelconque des revendications 4 et 5, caractérisée en ce que les taquets (6) comportent une embase (6e) coopérant avec la face intérieure de sa partie transversale.

7. Jante suivant l'une quelconque des revendications 1 à 6, caractérisée en ce que des rivets (12) sont engagés dans les

2

0035457

trous (6c, 6d) des taquets et ceux (9, 10, 11) des bras (2) pour solidariser ces derniers et la jante.

8. Roue caractérisée en ce qu'elle comporte une jante suivant l'une quelconque des revendications 1 à 7.

9. Roue suivant la revendication 8, caractérisée en ce que ses bras sont réalisés au moyen de deux profilés identiques (4) comportant un voile axial et deux ailes qui se prolongent vers le centre par une chape propre à être fixée au moyeu, et vers l'extérieur par deux oreilles (4f, 4g) dont l'une (4f) qui se trouve dans le plan de l'une des ailes est orientée obliquement, tandis que l'autre oreille (4g) qui prolonge l'autre aile est déportée latéralement vers l'extérieur.

10. Roue suivant la revendication 9, caractérisée en ce que les oreilles (4f, 4g) des profilés (4) de ses bras (2) comportent respectivement deux trous (9, 11) et un trou (10), le trou (9) extrême de l'oreille (4f) étant en vis-à-vis de celui (10) de l'oreille (4g), tandis que l'autre trou (11) de l'oreille (4f) est dégagé par rapport à l'oreille (4g).

Fig. 1

Fig. 2

Fig. 3

Fig. 6

0035457

Fig. 4

Fig. 5

Fig. 8

Fig. 7

**Office européen des brevets**

**RAPPORT DE RECHERCHE EUROPEENNE**

EP 81 42 0017

| Catégorie | Citation du document avec indication, en cas de besoin, des parties pertinentes | Revendication concernée | CLASSEMENT DE LA DEMANDE (Int. Cl.³) |
|---|---|---|---|
| | <u>FR - A - 2 333 653</u> (KREIDLER) <br> * figures 1 à 3; page 2, lignes 6-16 * <br><br> -- | 1,2 | B 60 B 21/06 <br> B 60 B 1/14 |
| | <u>FR - A - 2 347 209</u> (HONDA) <br> * en entier * <br><br> -- | 1,2 | |
| | <u>FR - A - 2 367 625</u> (MONTON) <br> * en entier * <br><br> -- | 1,2 | **DOMAINES TECHNIQUES RECHERCHES (Int. Cl.³)** |
| A | <u>US - A - 1 398 558</u> (LACHMAN) | | B 60 B |
| A | <u>FR - A - 435 408</u> (BRAMPTON) | | |
| | ------ | | |

**DOCUMENTS CONSIDERES COMME PERTINENTS**

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 15.05.1981 | BILLAUD |

OEB Form 1503.1   06.78